# FASCICULE DE BREVET EUROPEEN

(11) **EP 3 085 554 B1**
(45) Date de publication et mention de la délivrance du brevet: **11.09.2019**
(21) Numéro de dépôt: 16159235.7
(22) Date de dépôt: 08.03.2016
(51) Int. Cl.: B60D 1/24, B60D 1/48, B60D 1/56

(54) **ENSEMBLE DE PARE-CHOCS COMPORTANT UN ECROU DE REMORQUAGE ET VEHICULE COMPORTANT UN TEL ENSEMBLE DE PARE-CHOCS**
STOSSDÄMPFEREINHEIT, DIE EINE ABSCHLEPPBUCHSE UMFASST, UND FAHRZEUG, DAS EINE SOLCHE STOSSDÄMPFEREINHEIT UMFASST
BUMPER ASSEMBLY INCLUDING A TOWING NUT AND VEHICLE INCLUDING SUCH A BUMPER ASSEMBLY

(30) Priorité: 21.04.2015 FR 1553563
(43) Date de publication de la demande: 26.10.2016
(73) Titulaire: PSA Automobiles SA, 78300 Poissy (FR)
(72) Inventeur: BESSETTE, Damien, 25150 ECOT (FR); MERESSE, Ludovic, 25750 ARCEY (FR)

(56) Documents cités:
- DE-A1- 19 942 059
- DE-A1-102009 055 695

## Description

La présente invention concerne un ensemble de pare-chocs pour un véhicule, en particulier pour un véhicule automobile et un véhicule comportant un tel ensemble de pare-chocs.

Elle concerne plus particulièrement un ensemble de pare-chocs qui comporte une poutre de pare-chocs qui s'étend essentiellement selon l'axe transversal du véhicule, un boitier d'absorption de chocs disposé en arrière de la poutre de pare-chocs, qui s'étend principalement selon l'axe longitudinal du véhicule et un écrou de remorquage disposé le long de la poutre de pare-chocs, qui s'étend principalement selon l'axe longitudinal du véhicule et qui comporte une excroissance latérale qui forme une surface d'appui avant de écrou de remorquage contre la poutre de pare-chocs.

Un exemple de réalisation est divulgué dans le document EP1361082 qui révèle un ensemble de pare-chocs qui comporte une telle poutre de pare-chocs, un boitier d'absorption de chocs disposé en arrière de la poutre de pare-chocs et un écrou de remorquage disposé le long de la poutre de pare-chocs. L'écrou de remorquage est solidarisé sur une partie arrière de la poutre de pare-chocs au moyen d'une partie en excroissance latérale qui forme une collerette. Les points de fixation de l'écrou de remorquage avec la poutre de pare chocs se trouvent en bordure de l'extrémité libre de la collerette. Une partie sécable est formée le long de la collerette, en bordure des points de fixation. La présence de la partie sécable permet de limiter la rigidité d'un tel montage. Sans la partie sécable, l'écrou de remorquage, de par sa rigidité, dégraderais le fonctionnement du boitier d'absorption en cas de choc avant sur le véhicule. DE 19942059 A1 divulgue un ensemble de pare-chocs selon le préambule de la revendication 1.

Mais un tel montage est principalement adapté pour un mode de réalisation où le boitier d'absorption de chocs et l'écrou de remorquage sont dans un même alignement. Or, pour des raisons de style, il n'est pas toujours possible d'avoir un tel alignement.

Un des buts de l'invention est donc de remédier au moins partiellement aux inconvénients de l'art antérieur et de proposer un ensemble de pare-chocs pour un véhicule, en particulier pour un véhicule automobile, qui comporte une poutre de pare-chocs qui s'étend essentiellement selon l'axe transversal du véhicule, un boitier d'absorption de chocs disposé en arrière de la poutre de pare-chocs, qui s'étend principalement selon l'axe longitudinal du véhicule et un écrou de remorquage disposé le long de la poutre de pare-chocs, qui s'étend principalement selon l'axe longitudinal du véhicule et qui comporte une excroissance latérale qui forme une surface d'appui avant de écrou de remorquage contre la poutre de pare-chocs. Selon l'invention, l'ensemble de pare-chocs est tel que l'écrou de remorquage est positionné décalé latéralement par rapport au boitier d'absorption, avec la distance entre l'écrou de remorquage et le boitier d'absorption de chocs qui est inférieure à 15mm. Préférentiellement une telle distance est comprise entre 5mm et 10mm. Une distance plus grande que 15mm risque de déformer la poutre de pare-chocs en cas de remorquage du véhicule au moyen de l'écrou de remorquage. Une distance plus courte que 5mm, présente le risque d'avoir l'écrou de remorquage qui modifie l'écrasement du boitier d'absorption de choc en cas de choc avant, créant un point dure lors d'un choc sur l'avant de l'ensemble de pare-chocs.

Selon une première caractéristique de l'invention, la poutre de pare-chocs est réalisée dans un alliage léger tel que de l'aluminium. Une telle poutre de pare-chocs en aluminium présente généralement une épaisseur à l'emplacement de l'écrou de remorquage qui est comprise entre 30mm et 50mm, préférentiellement ladite épaisseur étant de 40mm. Une telle poutre de pare-chocs en aluminium de faible épaisseur augmente encore le risque de déformer de la poutre de pare-chocs en cas de remorquage du véhicule au moyen de l'écrou de remorquage, faisant qu'il est même préférable de se limiter à une distance de 10mm entre l'écrou de remorquage et le boitier d'absorption de chocs.

Selon une deuxième caractéristique de l'invention, l'écrou de remorquage traverse de part en part la poutre de pare-chocs et présente une forme cylindrique de révolution, avec une première partie qui traverse de part en part la poutre de pare-chocs et une seconde partie, de plus grand diamètre extérieur, qui est positionnée en saillie de la partie arrière de la poutre de pare-chocs. Le passage entre la première partie et la seconde partie de l'écrou de remorquage forme un épaulement. L'épaulement forme la surface d'appui avant de l'écrou de remorquage contre la poutre de pare-chocs.

Selon une troisième caractéristique de l'invention, l'écrou de remorquage est soudé sur la poutre de pare-chocs. Au moins un point de soudure ou au moins un cordon de soudure est formé entre la bordure extérieure dudit épaulement et la poutre de pare-chocs.

Selon une quatrième caractéristique de l'invention, la poutre de pare-chocs comporte deux boitiers d'absorptions de chocs positionnés sensiblement à chacune de ces deux extrémités latérales, l'écrou de remorquage étant positionnée en bordure extérieure d'un des deux boitiers d'absorptions de chocs.

La présente invention concerne aussi un véhicule qui comporte un ensemble de pare-chocs avec au moins une des caractéristiques précédentes, un tel ensemble étant destiné à former une partie de la partie avant ou la partie arrière de la structure du véhicule.

D'autres caractéristiques et avantages de l'invention apparaîtront plus clairement à la lecture de la description suivante, donnée à titre d'exemple illustratif et non limitatif, et des dessins annexés parmi lesquels :
- La figure 1 représente une vue en perspective, d'un véhicule où est représentée, en transparence, une partie de la structure avant qui constitue une partie de l'ensemble de pare-chocs selon l'invention ;
- La figure 2 représente une vue avant, en perspective, de l'ensemble de pare-chocs selon l'invention ;
- La figure 3 représente une vue arrière, en perspective, d'une des extrémités d'une poutre de pare-chocs sur laquelle est reliée un des deux boitiers d'absorbeurs de chocs en bordure duquel est positionné un écrou de remorquage selon l'invention ; et
- La figure 4 représente une vue en coupe de l'une des extrémités de la poutre de pare-chocs telle que représentée à la figure 3.

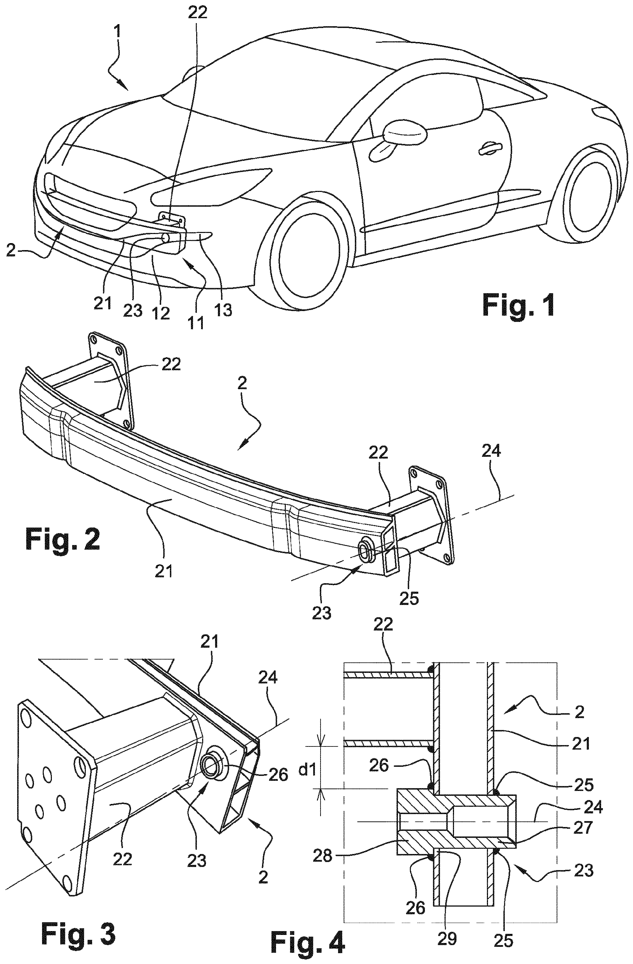

La figure 1 représente une vue en perspective d'un véhicule 1 où est représentée, en transparence, une partie de la structure avant qui constitue une partie du pare-chocs 2. Le pare-chocs 2 comporte une poutre de pare-chocs 21, qui s'étend essentiellement selon l'axe transversal du véhicule, un boitier d'absorption de chocs 22 disposé en arrière de la poutre de pare-chocs 21 et un écrou de remorquage 23, autrement appelé noix de remorquage, disposé le long de la poutre de pare-chocs 21. Le boitier d'absorption de chocs 22 et l'écrou de remorquage 23 s'étendent principalement selon l'axe longitudinal du véhicule. L'avant du véhicule 1 comporte une peau de pare-chocs 11 qui comporte des parties peintes 12 et des parties noires 13. L'écrou de remorquage 23 est positionné débouchant dans une partie noire 13 de la peau de pare-chocs 11. Pour ce faire, l'écrou de remorquage 23 est décalé latéralement par rapport au boitier d'absorption 22 tel que plus particulièrement expliqué dans la suite de la description.

Les figures 2 à 4 représentent des vues d'une partie du pare-chocs 2 et plus particulièrement de la poutre de pare-chocs 21, des boitiers d'absorptions de chocs 22 et de l'écrou de remorquage 23.

Sur la figure 2 le pare-chocs 2 est représenté selon une vue en perspective. La poutre de pare-chocs 21 est reliée à la structure du véhicule au moyen de deux boitiers d'absorbeurs de chocs 22. En bordure extérieure d'un des deux boitiers d'absorbeurs de chocs 22 est positionné l'écrou de remorquage 23. L'écrou de remorquage 23 et les deux boitiers d'absorbeurs de chocs 22 s'étendent principalement selon un axe 24 aligné selon la direction longitudinal du véhicule. La poutre de pare-chocs 21 s'étend perpendiculairement à l'axe 24, principalement selon l'axe transversal du véhicule. L'écrou de remorquage 23 débouche en saillie de la face avant de la poutre de pare-chocs 21. La longueur en saillie de l'écrou de remorquage 23 est adaptée pour qu'un cordon de soudure avant 25 soit appliqué lors d'une opération de soudage sur la poutre de pare-chocs 21. La poutre de pare-chocs 21 est réalisée dans un alliage léger tel que de l'aluminium et présente une épaisseur à l'emplacement de l'écrou de remorquage 23 inférieur à 50mm. Dans l'exemple tel que représenté la poutre de pare-chocs 21 présente une épaisseur de 40mm.

Sur la figure 3 est représentée une vue arrière, en perspective, d'une des deux extrémités de la poutre de pare-chocs 21 sur laquelle est reliée un des deux boitiers d'absorbeurs de chocs 22 en bordure duquel est positionné l'écrou de remorquage 23. L'écrou de remorquage 23 traverse de part en part la poutre de pare-chocs 21 et débouche en saillie de la face arrière de la poutre de pare-chocs 21. La longueur en saillie de l'écrou de remorquage 23 est adaptée pour qu'un cordon de soudure arrière 26 soit appliqué lors d'une opération de soudage sur la poutre de pare-chocs 21.

Sur la figure 4 est représentée une vue en coupe de l'une des extrémités de la poutre de pare-chocs 21 telle que représentée à la figure 3. Sur cette coupe est plus particulièrement visible la forme de l'écrou de remorquage 23. L'écrou de remorquage 23 présente une forme extérieure cylindrique de révolution composée de deux parties de diamètres différents. L'écrou de remorquage 23 comporte une première partie 27 qui traverse de part en part la poutre de pare-chocs 21 et une seconde partie 28, de plus grand diamètre extérieur, en saillie de l'arrière de la poutre de pare-chocs 21. La délimitation entre la première partie 27 et la seconde partie 28 de l'écrou de remorquage 23 forme un épaulement 29. L'épaulement 29 de l'écrou de remorquage 23 forme une surface d'appui avant de l'écrou de remorquage 23 contre la poutre de pare-chocs 21. Le cordon de soudure avant 25 permet de solidariser l'écrou de remorquage 23 à la face avant de la poutre de pare-chocs 21. Le cordon de soudure arrière 26 permet de solidariser l'écrou de remorquage 23 à la face arrière de la poutre de pare-chocs 21. L'écrou de remorquage 23 comporte un alésage qui présente des parties filetées pour permettre de visser un anneau de remorquage (non représenté dans les figures). La distance d1 entre le bord latérale de la seconde partie 28 de l'écrou de remorquage 23 et le boitier d'absorption de chocs 22 est au moins inférieur à 15mm. Cette distance d1 est généralement plutôt comprise entre 5mm et 10mm. Une distance trop importante, risque de déformer la poutre de pare-chocs 21 lors le véhicule est tracté, du fait de la conception allégé du pare-chocs. Une distance trop faible présente au moins deux inconvénient ; difficulté d'appliquer les cordons de soudure entre le bord latérale de la seconde partie 28 de l'écrou de remorquage 23 et du boitier absorbeur de chocs 22 et présente le risque que l'écrou de remorquage 23 forme un point dure qui modifie l'écrasement du boitier d'absorption de chocs 22 lors d'un choc avant.

Dans l'exemple tel que présenté, l'écrou de remorquage 23 est positionné en bordure extérieur d'un des deux boitiers d'absorptions de chocs 22, mais l'écrou de remorquage 23 peut tout aussi bien être positionné entre les deux boitiers d'absorptions de chocs 22, avec toujours la même problématique de distance avec un des deux boitiers d'absorptions de chocs 22. Un tel écrou de remorquage 23 trouve tout son sens dans le cadre d'un pare-chocs allégé, mais peut tout aussi bien être utilisé pour tous types de pare-chocs.

## Revendications

1. Ensemble de pare-chocs (2) pour un véhicule, en particulier pour un véhicule automobile, comportant une poutre de pare-chocs (21) qui s'étend essentiellement selon l'axe transversal du véhicule, un boitier d'absorption de chocs (22) disposé en arrière de la poutre de pare-chocs (21), qui s'étend principalement selon l'axe longitudinal du véhicule et un écrou de remorquage (23) disposé le long de la poutre de pare-chocs (21), qui s'étend principalement selon l'axe longitudinal du véhicule et qui comporte une excroissance latérale qui forme une surface d'appui avant de écrou de remorquage (23) contre la poutre de pare-chocs (21), l'écrou de remorquage (23) traverse de part en part la poutre de pare-chocs (21) et est positionné décalé latéralement par rapport au boitier d'absorption (22), la distance entre l'écrou de remorquage (23) et le boitier d'absorption de chocs (22) étant inférieure à 15mm, préférentiellement ladite distance étant comprise entre 5mm et 10mm, **caractérisé en ce que** l'écrou de remorquage (23) présente une forme cylindrique de révolution, avec une première partie (27) qui traverse de part en part la poutre de pare-chocs (21) et une seconde partie (28), de plus grand diamètre extérieur, qui est positionnée en saillie de la partie arrière de la poutre de pare-chocs (21), le passage entre la première partie (27) et la seconde partie (28) de l'écrou de remorquage (23) forme un épaulement (29), ledit épaulement (29) formant la surface d'appui avant de l'écrou de remorquage (23) contre la poutre de pare-chocs (21).

2. Ensemble de pare-chocs (2) selon la revendication 1, **caractérisé en ce que** la poutre de pare-chocs (21) est réalisée dans un alliage léger tel que de l'aluminium.

3. Ensemble de pare-chocs (2) selon la revendication 1 ou 2, **caractérisé en ce que** la poutre de pare-chocs (21) présente une épaisseur à l'emplacement de l'écrou de remorquage (23) qui est comprise entre 30mm et 50mm, préférentiellement ladite épaisseur étant de 40mm.

4. Ensemble de pare-chocs (2) selon l'une quelconque des revendications précédentes, **caractérisé en ce que** l'écrou de remorquage (23) est soudé sur la poutre de pare-chocs (21).

5. Ensemble de pare-chocs (2) selon la revendication 4, **caractérisé en ce qu'**au moins un point de soudure ou au moins un cordon de soudure (26) est formé entre la bordure extérieure dudit épaulement (29) et la poutre de pare-chocs (21).

6. Ensemble de pare-chocs (2) selon l'une quelconque des revendications précédentes, **caractérisé en ce que** la poutre de pare-chocs (21) comporte deux boitiers d'absorptions de chocs (22) positionnés sensiblement à chacune de ces deux extrémités latérales, l'écrou de remorquage (23) étant positionnée en bordure extérieure d'un des deux boitiers d'absorptions de chocs (22).

7. Véhicule (1) comportant un ensemble de pare-chocs (2) selon l'une quelconque des revendications précédentes.

## Patentansprüche

1. Stoßdämpfereinheit (2) für Fahrzeug, insbesondere für Kraftfahrzeug, die einen Stoßdämpferträger (21) umfasst, der sich im Wesentlichen entlang der Querachse des Fahrzeugs erstreckt, ein Stoßabsorptionsgehäuse (22), das hinter dem Stoßdämpferträger (21) angeordnet ist, das sich hauptsächlich entlang der Längsachse des Fahrzeugs erstreckt, und eine Abschleppbuchse (23), die entlang des Stoßdämpferträgers (21) angeordnet ist, die sich hauptsächlich entlang der Längsachse des Fahrzeugs erstreckt und eine seitliche Ausstülpung umfasst, die eine vordere Auflageoberfläche einer Abschleppbuchse (23) gegen den Stoßdämpferträger (21) bildet, die Abschleppbuchse (23) den Stoßdämpferträger (21) vollständig durchquert und seitlich bezüglich des Absorptionsgehäuses (22) versetzt positioniert ist, wobei der Abstand zwischen der Abschleppbuchse (23) und dem Stoßabsorptionsgehäuse (22) kleiner ist als 15 mm, wobei der Abstand bevorzugt zwischen 5 mm und 10 mm liegt, **dadurch gekennzeichnet, dass** die Abschleppbuchse (23) eine zylindrische Rotationsform aufweist, mit einem ersten Teil (27), der den Stoßdämpferträger (21) vollständig durchquert, und einem zweiten Teil (28) mit größerem Außendurchmesser, der von dem hinteren Teil des Stoßdämpferträgers (21) vorragend positioniert ist, wobei die Passage zwischen dem ersten Teil (47) und dem zweiten Teil (28) der Abschleppbuchse (23) eine Schulter (29) bildet, wobei die Schulter (29) die vordere Auflageoberfläche der Abschleppbuchse (23) gegen den Stoßdämpferträger (21) bildet.

2. Stoßdämpfereinheit (2) nach Anspruch 1, **dadurch gekennzeichnet, dass** der Stoßdämpferträger (21) aus einer Leichtmetalllegierung wie Aluminium hergestellt ist.

3. Stoßdämpfereinheit (2) nach Anspruch 1 oder 2, **dadurch gekennzeichnet, dass** der Stoßdämpferträger (21) eine Stärke an der Stelle der Abschleppbuchse (23) aufweist, die zwischen 30 mm und 50 mm liegt, wobei die Stärke bevorzugt 40 mm beträgt.

4. Stoßdämpfereinheit (2) nach einem der vorstehenden Ansprüche, **dadurch gekennzeichnet, dass** die Abschleppbuchse (23) auf den Stoßdämpferträger (21) geschweißt ist.

5. Stoßdämpfereinheit (2) nach Anspruch 4, **dadurch gekennzeichnet, dass** mindestens ein Schweißpunkt oder mindestens eine Schweißnaht (26) zwischen dem äußeren Rand der Schulter (29) und dem Stoßdämpferträger (21) gebildet ist.

6. Stoßdämpfereinheit (2) nach einem der vorstehenden Ansprüche, **dadurch gekennzeichnet, dass** der Stoßdämpferträger (21) zwei Stoßabsorptionsgehäuse (22) umfasst, die im Wesentlichen an jeweils einem der zwei seitlichen Enden positioniert sind, wobei die Abschleppbuchse (23) am äußeren Rand eines der zwei Stoßabsorptionsgehäuse (22) positioniert ist.

7. Fahrzeug (1), das eine Stoßdämpfereinheit (2) nach einem der vorstehenden Ansprüche umfasst.

## Claims

1. A bumper assembly (2) for a vehicle, in particular for a motor vehicle, comprising a bumper beam (21) which extends essentially along the transverse axis of the vehicle, a shock-absorption casing (22) arranged at the rear of the bumper beam (21), which extends principally along the longitudinal axis of the vehicle and a towing nut (23) arranged long the bumper beam (21), which extends principally along the longitudinal axis of the vehicle and which comprises a lateral excrescence which forms a front support surface of the towing nut (23) against the bumper beam (21), the towing nut (22) passes through the bumper beam (21) and is positioned offset laterally with respect to the absorption casing (22), the distance between the towing nut (23) and the shock-absorption casing (22) being less than 15mm, preferably said distance being comprised between 5mm and 10mm, **characterized in that** the towing nut (23) has a cylindrical revolution shape, with a first part (27) which passes through the bumper beam (21), and a second part (28), of larger exterior diameter, which is positioned projecting from the rear part of the bumper beam (21), the passage between the first part (27) and the second part (28) of the towing nut (23) forms a shoulder (29), said shoulder (29) forming the front support surface of the towing nut (23) against the bumper beam (21).

2. The bumper assembly (2) according to Claim 1, **characterized in that** the bumper beam (21) is made from a light alloy such as aluminium.

3. The bumper assembly (2) according to Claim 1 or 2, **characterized in that** the bumper beam (21) has a thickness at the site of the towing nut (23) which is comprised between 30mm and 50mm, preferably said thickness being 40mm.

4. The bumper assembly (2) according to any one of the preceding claims, **characterized in that** the towing nut (23) is welded to the bumper beam (21).

5. The bumper assembly (2) according to Claim 4, **characterized in that** at least one weld spot or at least one weld bead (26) is formed between the exterior edge of said shoulder (29) and the bumper beam (21).

6. The bumper assembly (2) according to any one of the preceding claims, **characterized in that** the bumper beam (21) comprises two shock-absorption casings (22) positioned substantially at each of these two lateral ends, the towing nut (23) being positioned at the exterior edge of one of the two shock-absorption casings (22).

7. A vehicle (1) comprising a bumper assembly (2) according to any one of the preceding claims.
